# EUROPÄISCHE PATENTSCHRIFT

(11) **EP 0 960 723 B1**
(45) Veröffentlichungstag und Bekanntmachung des Hinweises auf die Patenterteilung: **06.05.2004**
(21) Anmeldenummer: 99110033.0
(22) Anmeldetag: 21.05.1999
(51) Int. Cl.: B32B 5/18, E04C 2/292, E04C 2/296, F16L 59/14, F16L 9/147, C08G 18/48

(54) **Verbundelement enthaltend Polyisocyanat-Polyadditionsprodukte**
Composite elements comprising polyisocyanate-polyaddition products
Eléments composites comprenant des produits de polyaddition de polyisocyanate

(30) Priorität: 27.05.1998 DE 19823585
(43) Veröffentlichungstag der Anmeldung: 01.12.1999
(73) Patentinhaber: BASF AKTIENGESELLSCHAFT, 67056 Ludwigshafen (DE)
(72) Erfinder: Biedermann, Anja Dr., 01968 Senftenberg (DE); Hempel, Renate, 01945 Ruhland (DE); Rotermund, Udo Dr., 01190 Ortrand (DE); Schilling, Udo, 49356 Diepholz (DE); Schlegel, Karl Dr., 01987 Schwarzheide (DE)

(56) Entgegenhaltungen:
- EP-A- 0 084 088
- EP-A- 0 488 038
- EP-A- 0 835 750
- DE-A- 3 307 865
- US-A- 4 645 710
- US-A- 4 671 992

## Beschreibung

Die Erfindung bezieht sich auf Verfahren zur Herstellung eines Verbundelementes, dadurch gekennzeichnet, daß man in einem Reaktionsraum, der begrenzt ist durch folgende Schichten:
ii) gegebenenfalls mindestens einen Kunststoff,
   daran anschließend
iii)einem Material, das eine Gaspermeation verhindert, iiia) 20 bis 500 µm mindestens eines thermoplastischen Kunststoffs sowie
iv) 1 bis 25 mm mindestens eines thermoplastischen Kunststoffes Isocyanate mit gegenüber Isocyanaten reaktiven Verbindungen in Gegenwart von Treibmitteln und gegebenenfalls Katalysatoren, Hilfs- und/oder Zusatzstoffen umsetzt, wobei durch die Reaktionswärme (iiia) schmilzt und nach Abkühlung (iii) und (iv) miteinander verbindet.

Des weiteren bezieht sich die Erfindung auf derart erhältliche Sandwichelemente und Rohre.

Die kontinuierliche oder diskontinuierliche Herstellung von Verbunden zwischen Polyisocyanat-Polyadditionsprodukten, üblicherweise Polyurethan- (PUR) oder Polyurethan/Polyisocyanurat- (PUR/PIR) Schaumstoffen, und kompakten Deckschichten ist seit langem bekannt. Derartige Verbunde werden beispielsweise als Sandwichelemente im Bau von Immobilien eingesetzt. Ein wichtiges Anwendungsgebiet ist ferner die Wärmeisolation von Rohren, die zum Transport von Wärme mittels heißem Wasser unter Druck dienen. Diese gedämmten Rohre weisen üblicherweise ein das Heizmedium transportierendes Innenrohr auf, meist aus Stahl, das mit PURoder PUR/PIR-Hartschaumstoff zur Wärmeisolation umgeben ist. Der Hartschaumstoff ist außen mit einem Mantelrohr als Feuchtigkeitssperre, abgedichtet, wobei aus konstruktiven Gründen zwischen dem Innenrohr und dem Mantelrohr ein mechanischer Verbund durch den Polyurethan-Hartschaumstoff vorliegen muß. Als Mantelrohr wird vielfach ein thermoplastischer Kunststoff, beispielsweise ein Polyolefin, eingesetzt. Das liegt vor allem an dem niedrigen Preis, den guten technischen Eigenschaften, z.B. der sehr gute Gleitwirkung, die sich im Erdreich beim Ausgleich von thermischen Spannungen sehr günstig auswirkt, der einfachen Verarbeitbarkeit und der Wasserundurchlässigkeit des thermoplastischen Kunststoffes, der als schützende Außenhaut bei einer Verlegung im Erdreich dient. Die Eigenschaften dieser gedämmten Rohre sind in der Norm DIN EN 253 festgelegt.

Das Heizmedium, das in den Rohren transportiert wird, meist unter Druck stehendes Wasser, wird nach dem gegenwärtigen Stand der Technik auf Temperaturen bis 140°C erhitzt. Der Trend geht wegen der dabei aus thermodynamischen Gründen erfolgenden Energieeinsparungen zu noch höheren Temperaturen, z.B. 150°C und kurzzeitig 160°C. Daher ist es wünschenswert, die Isolationswirkung des Schaumstoffes vor allem im Bereich höherer Temperaturen dauerhaft zu verbessern und die Wärmeleitfähigkeit nachhaltig zu erniedrigen. Dabei ist es insbesondere wünschenswert, daß die gedämmten Rohre über die gesamte Gebrauchsdauer von 30-50 Jahren eine niedrige Wärmeleitfähigkeit und eine gute Festigkeit aufweisen.

Bei praktischen Anwendungen werden die mit Hartschaumstoffen und einer Kunststoffhaut ummantelten Rohre in das Erdreich eingegraben und müssen dem Erddruck auch unter den Bedingungen thermischer Ausdehnung an Rohrbiegungen bei erhöhter Temperatur dauerhaft standhalten, ohne daß der mechanische Verbund zwischen Innenrohr und Außenrohr beeinträchtigt wird. Eine zu starke bleibende Verformung des Hartschaumstoffes bei erhöhter Temperatur beeinträchtigt die Haltbarkeit des Verbundes, vor allem bei im Laufe eines Jahreszyklus zwangsläufig wechselnden Temperaturbedingungen. Diese Verformung ist nicht einfach durch Einstellung eines höheren Druck-E-moduls des Schaums zu verringern, da die damit verbundene Sprödigkeit durch zu hohe Spannungs- und Rißbildung infolge der nicht zu vermeidenden thermischen Ausdehnung ebenfalls zur Beeinträchtigung des Verbundes führt.

Durch die ständige thermische Belastung des Hartschaums in dem Verbund bei erhöhten Temperaturen bis zu dauerhaft 140°C bis 160°C am Innenrohr und wesentlich niedrigeren Temperaturen am Mantelrohr im Erdreich altert der Schaum und läßt in seiner Festigkeit nach. Diese Alterung tritt im Inneren von Verbunden mit thermoplastischen Kunststoffen als Mantelrohr in unerwünschter Weise besonders stark auf. Diese thermische Alterung äußert sich in einer chemischen Zerstörung des Schaums, die an den sehr dünnen Zellwänden einer Dicke unter 1 µm beginnt. Deshalb läßt sich diese Alterung neben der Abnahme der Festigkeit, z.B. der Druckfestigkeit, auch an einer Erhöhung des Offenzelligkeitsgrades nachweisen.

Nachdem aus ökologischen Gründen die als Treibmittel für den Hartschaumstoff eingesetzten Fluorkohlenwasserstoffe (FCKW), beispielsweise Trichlorfluormethan (R11), nicht mehr verwendet werden durften, mußte nach alternativen Treibmitteln gesucht werden. Eine häufig verwendete Möglichkeit ist der Einsatz von Kohlendioxid aus der Reaktion zwischen Isocyanat und Wasser. Bei dieser Variante werden zwar das Ozonschädigungspotential (ODP) auf Null und das globale Treibhauspotential (GWP) gegenüber R11 erheblich reduziert, gleichzeitig wird jedoch die Wärmedämmwirkung des Schaumstoffes gemindert, d.h. die Wärmeleitfähigkeit erhöht. Durch Kombination von Wasser mit Kohlenwasserstoffen, meist Cyclopentan, als Treibmittel sind ODP und GWP etwa in gleicher Weise erniedrigt wie bei reinem Kohlendioxid; die Wärmeleitfähigkeit des Schaumstoffes ist niedriger als bei Einsatz von reinem Kohlendioxid, jedoch höher als mit R11 als Treibmittel.

Der Einsatz von beispielsweise Cyclopentan und Wasser oder Wasser allein als Treibmittel führt zwangsläufig zu höheren Wärmeleitfähigkeiten als es früher mit dem Treibmittel R 11 der Fall war. Zudem weisen Schaumstoffe in den gedämmten Rohren mit beispielsweise einer Polyolefinaußenhaut nach längerer Zeit eine höhere Wärmeleitfähigkeit als zu Beginn der Lebensdauer auf. Dieser unerwünschte Anstieg war beim Einsatz von R 11 gering, ist aber nach dem Wechsel auf Wasser und Kohlenwasserstoffe, z.B. Cyclopentan, als Treibmittel unerwünscht hoch, beim Einsatz von Wasser allein noch wesentlich höher.

Man könnte annehmen, daß die Herstellung von Metallverbundrohren, d.h. Verbunden aus Metallaußenrohr/PUR oder PUR/PIR - Schaum/Metallinnenrohr unsere Aufgabe lösen würde, da sich z.B. in Sandwichelementen mit dicken metallischen Deckschichten um oder über 500 µm die Wärmeleitfähigkeit von Schaumstoffen über der Zeit nur wenig ändert. Aus Flexibilitätsgründen und wegen der hohen Kräfte bei der Wärmeausdehnung können mit diesem Verbund jedoch nur sehr kurze Rohrlängen eingesetzt werden. Längere Rohre werden durch den ständigen möglichen Wechsel der Temperaturen im Einsatz schnell zerstört, da sie nicht die spannungsabbauenden Eigenschaften der Rohrelemente mit einer Außenhaut aus thermoplastischem Kunststoff haben. Anderenfalls muß mit einem Isolationsmaterial z.B. aus Mineralien oder Fasern gearbeitet werden. Dabei ist aber kein Verbund zwischen dem medientragenden Innenrohr und dem Mantelrohr gegeben und die Wärmedämmwirkung noch weiter verschlechtert.

Nach DE-A 296 15 423 werden wärmeisolierte Rohre aus Flexibilitätsgründen aus gewellten Metallrohren hergestellt, die diese Nachteile nicht aufweisen. Dieses Herstellungsverfahren ist jedoch sehr aufwendig und daher recht teuer.

EP-A 84088 beschreibt die Herstellung eines gut biegefähigen, dauerhaft wärmeisolierten Rohres für Haus-, d.h. Nebenanschlüsse. An die Haltbarkeit des Verbundes werden deshalb nur geringe Anforderungen gestellt. Die gegebenenfalls einsetzbare Aluminiumfolie mit Copolymerbeschichtung wird in sich durch bei dem Extrusionsvorgang verschweißt, sie haftet durch ein solches Verfahren aber sowohl am Polyolefinschutzmantel als auch am Dämmschaum nur ungenügend. Die für einen starren Verbund erforderliche Festigkeit ist dadurch nicht gegeben. Das gilt entsprechend auch für DE-A 3307865, worin ebenfalls nur die Copolymerbeschichtung beschrieben wird. Wegen des gewellten Innenrohres ist das Problem der Spannungsentstehung gemildert und die Anforderungen an den Verbund sind nicht so hoch. EP-A 488 038 offenbart Verbundfilmelemente enthaltend offenzellige Schäume und Thermoplast. US 4 671 992 beschreibt Verbundelemente auf der Basis von Polyurethanschäumen und Polyolefin. EP-A 835 750 lehrt Sandwichplatten enthaltend Polyisocyanuratschaumstoffe.

In DE-A 3237105 wird eine flexible Kombination aus Aluminium und Polyolefin beschrieben, wodurch der gesamte Verbund zur Aufnahme von Kräften ungeeignet ist.

In BE-A 836337 wird lediglich eine flexible Verbundfolie aus Aluminium Papier und Polyethylen beschrieben jedoch kein Polyolefin /Polyurethan - Verbund, der alle aufgezeigten Nachteile bisheriger Lösungen beseitigt.

Soweit in den genannten Schriften ein Verschweißen des Mantelrohres beschrieben wird, erfolgt dieses durch Extrusion. Diese nach der Herstellung des Dämmschaumes durchzuführende Wärmebehandlung kann sich nachteilig auf den Schaum auswirken und ist zudem aufwendig.

Aus dem Stand der Technik ist somit keine technische Lehre bekannt, die eine Lösung der dieser Erfindung zugrunde liegende Aufgabe nahelegt, nämlich eine Verbundstruktur bereitzustellen, die einen PUR- oder PUR/PIR-Schaumstoff und eine thermoplastische Schicht aufweist und die folgende Vorteile beinhaltet:
- einfache technische Herstellung, so daß ein fester Verbund zwischen den Schichten ohne Extrusion der Mantelschicht, die mit einer unerwünschten Wärmebelastung des Dämmschaumes verbunden wäre, erreicht werden kann,
- keine Diffusion von Treibmitteln aus und Luft in den dem Schaumstoff,
- nachhaltiger, fester Verbund zwischen dem Schaumstoff und dem thermoplastischen Kunststoff,
- hohe Stabilität und geringe Wärmeleitfähigkeit des Verbundes auch bei extremer Temperaturbelastung über sehr lange Zeiträume.

Diese Aufgabe konnte durch ein eingangs beschriebenes Verfahren und derart erhältliche Sandwichelemente und Röhren gelöst werden.

Die erfindungsgemäßen Verbundelemente weisen insbesondere einen nachhaltigen, festen Verbund zwischen dem Schaum, dem Material, das eine Gaspermeation verhindert und dem thermoplastischen Kunststoff auf. Gerade die Verbindung zwischen dem Material, das eine Gaspermeation, d.h. beispielsweise eine Diffusion von Treibmitteln aus dem Schaumstoff, verhindert und dem thermoplastischen Kunststoff konnte bislang nicht befriedigend erreicht werden. Dieser Nachteil konnte dadurch ausgeräumt werden, daß man (iv) auf (iii) verbindet. Dieses Aufschmelzen wird durch eine Schicht von thermoplastischem Kunststoff (iiia) erreicht, die zwischen (iii) und (iv) angeordnet wird und beim Herstellen von (i) durch die Reaktionswärme schmilzt. Nach dem Abkühlen verbindet die vormals geschmolzene Schicht die Schichten (iii) und (iv). Die Schicht (iiia) weist bevorzugt eine Dicke von 20 bis 500 µm auf. Diese geringe Dicke stellt sicher, daß die Schicht bevorzugt vollständig bei der Herstellung des Schaumstoffes durch die Reaktionswärme schmilzt. Ein direktes Aufschmelzen von (iv) auf (iii) ist in der Regel nicht möglich, da durch die übliche große Dicke von (iv) diese Schicht nicht ausreichend schmilzt und somit keine befriedigende Verbindung zwischen (iii) und (iv) hergestellt wird. Das Aufschmelzen von (iii) auf (iv) durch die Reaktionswärme, die bei der Herstellung von (i) entsteht, bietet den entscheidenden Vorteil, daß eine weitere aufwendige und für den Schaum schädliche Wärmebelastung bei einem Verschmelzen von (iii) und (iv) vermieden wird.

Die erfindungsgemäßen Verbundelemente werden somit derart hergestellt werden, daß man in einem Reaktionsraum, der begrenzt ist durch folgende Schichten:
ii) gegebenenfalls mindestens einen Kunststoff,
iii) einem Material, das eine Gaspermeation verhindert,
iiia) 20 bis 500 µm mindestens eines thermoplastischen Kunststoffs sowie
iv) 1 bis 25 mm mindestens eines thermoplastischen Kunststoffes.
Isocyanate mit gegenüber Isocyanaten reaktiven Verbindungen in Gegenwart von Treibmitteln und gegebenenfalls Katalysatoren, Hilfs- und/oder Zusatzstoffen umsetzt, wobei durch die Reaktionswärme (iiia) schmilzt und nach Abkühlung (iii) und (iv) miteinander verbindet.

Die Schichten sind derart angeordnet, daß die Schicht (ii) bei der Herstellung in direktem Kontakt mit dem Reaktionssystem enthaltend die Isocyanate, die gegenüber Isocyanaten reaktiven Verbindungen, Treibmittel und gegebenenfalls Katalysatoren, Hilfs- und/oder Zusatzstoffe steht, sich die Schicht (iii) an die Schicht (ii) anschließt, darauf die Schicht (iiia) folgt und abschließend die Schicht (iv) angeordnet ist.

Die Schicht (iiia), die in dem erfindungsgemäßen Verfahren zwischen (ii) und (iv) angeordnet ist, verschmilzt bevorzugt vollständig mit (iv), so daß in dem Verbundelement unter der Voraussetzung, daß (iiia) und (iv) aus dem gleichen thermoplastischen Kunststoff bestehen, diese Schicht nicht nachweisbar ist. Bevorzugt setzt man (iii) und (iiia) bereits als Verbundfolie ein, beispielsweise eine Metallfolie, die bereits mit einem thermoplastischen Kunststoff beschichtet ist. Eine solche Verbundfolie, die anstelle von den Schichten (iii) und (iiia) bevorzugt eingesetzt werden kann, hat üblicherweise eine Dicke von 20,1 bis 1100 µm, wobei die Metallschicht im allgemeinen 0,1 bis 600 µm, bevorzugt 0,1 bis 200 µm dick ist und die Schicht des thermoplastischen Kunststoffes üblicherweise eine Dicke von 20 bis 500 µm aufweist. Eine solche Verbundfolie wird in dem erfindungsgemäßen Verfahren und in den erfindungsgemäßen Verbundelementen derart orientiert, daß der thermoplastische Kunststoff der beschichteten Folie an die Schicht (iv) grenzt, um nach dem Aufschmelzen aufgrund der Reaktionswärme und der anschließenden Abkühlung sich mit der Schicht (iv) zu verbinden. Beispielsweise können als Verbundfolie aus der Verpackungsindustrie bekannte Mehrschichtfolien eingesetzt werden, die die genannte Schichtfolge aufweisen, z.B. mit der Schichtfolge Polyethylen (iiia), Aluminium (iii), Polyethylenterephthalat (ii), wobei das Aluminium als Folie eingearbeitet oder beispielsweise aufgesputtet sein kann.

Als thermoplastischer Kunststoff der Schicht (iiia), (iv) und/oder der Verbundfolie können beispielsweise übliche Polyolefine, z.B. Polyethylen, Polypropylen, Polypropylen-Polyethylenpolymere, wobei die genannten Polyolefine gegebenenfalls modifiziert vorliegen können, übliche andere thermoplastische Kunststoffe wie Polystyrol, Polyamide und/oder Polyethylenterephthalat eingesetzt werden, wobei die genannten Polyolefine bevorzugt sind.

Die Schichten (iii), (iv) bzw. die zum Schichtaufbau eingesetzte Verbundfolie können die gleichen oder verschiedene thermoplastische Kunststoffe enthalten. Des weiteren können als Schicht (iv) auch übliche Metalle oder Metallegierungen, beispielsweise Stahl, Aluminium, Edelstahllegierungen, Kupfer, Magnesium und/oder übliche Legierungen dieser genannten Metalle eingesetzt werden, insbesondere, wenn die Schicht (iv) das Innenrohr eines gedämmten, erfindungsgemäßen Rohres darstellt.

Die Schicht (iv) ist in der Regel auch bei einer vollständigen Verschmelzung mit der Schicht (iiia) oder der thermoplastischen Kunststoffschicht der Verbundfolie von diesen Schichten unterscheidbar, da im allgemeinen als Schicht (iv) ein thermoplastischer Kunststoff verwendet wird, der beispielsweise durch Ruß, Graphit, gemahlene Fasern, Mikroglaskugeln, Zeolithe, organische Infrarotabsorber wie z.B. Paliogen® schwarz der BASF Aktiengesellschaft, Lignine, Silikate, Glimmer, Glasfasern, Kreide, Titandioxid und/oder anderen bekannten Füllstoffen gefüllt. Eine Unterscheidung der Schicht (iiia) bzw. dem thermoplastischen Kunststoff der Verbundfolie von der Schicht (iv) wäre dann beispielsweise licht- oder elektronenmikroskopisch möglich. In diesem Falle enthalten die erfindungsgemäßen Verbundelemente, Sandwichelemente und Rohre zwischen den Schichten (iii) und (iv) nachweisbar die Schicht (iiia), die üblicherweise die bereits angegebene Dicke aufweist.

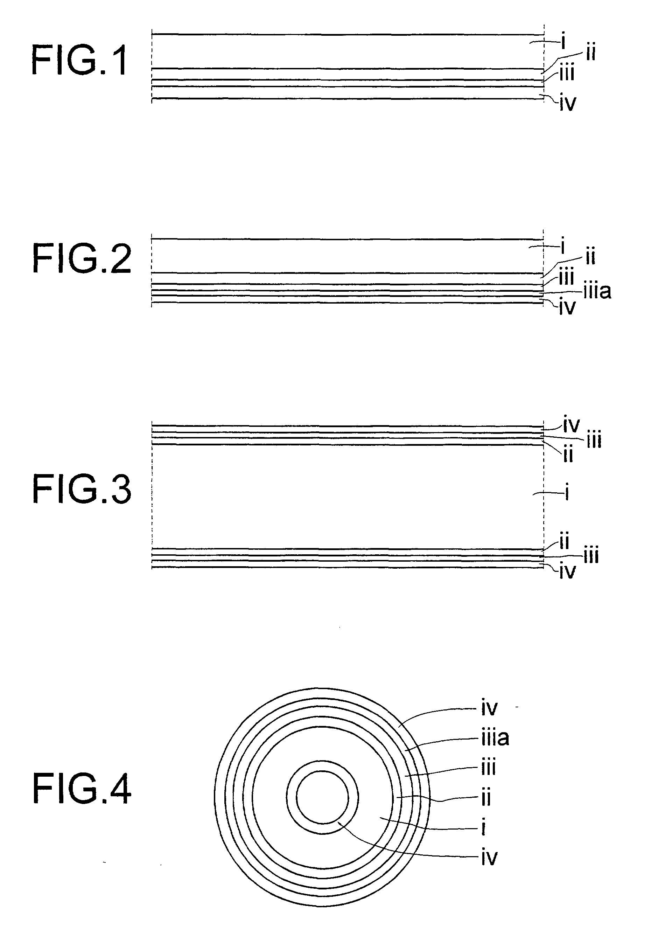

Erfindungsgemäße Verbundelemente sind beispielhaft in Figur 1 und 2 dargestellt, wobei in Figur 2 ein Verbundelement dargestellt ist, in dem die Schichten (iiia) und (iv) voneinander zu unterscheiden sind.

Die Schichten (i), (ii), (iii) und (iv) weisen bevorzugt folgenden Dicken auf:
(i) 0,5 bis 80 cm, bevorzugt 2 bis 15 cm,
(ii) 5 bis 1000 µm,
(iii) 0,1 bis 600 µm, bevorzugt 0,1 bis 200 µm,
(iv) 1 bis 25 mm, bevorzugt 1,5 bis 10 mm.

Als Material, das die Gaspermeation verhindert, kann beispielsweise eine Folie eingesetzt werden, die aus üblichen Metallen bestehen kann, z.B. Aluminium, Stahl, Edelstahllegierungen, Kupfer, Magnesium, Zinn, Silber, Gold, ander Edelmetalle und/oder übliche Legierungen der genannten Metalle.

Erfindungsgemäß bevorzugt ist ein Verbundelement, das im Querschnitt folgende Schichten aufweist:
i) 0,5 bis 80 cm Polyisocyanat-Polyadditionsprodukt,
ii) gegebenenfalls 5 bis 1000 µm mindestens eines Kunststoffes,
iii) 0,1 bis 600 µm, bevorzugt 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes.

Die erfindungsgemäßen Verbundelemente werden bevorzugt als gedämmte Rohre, beispielsweise als sogenannte Kunstscoffmantelrohre, Sandwichelemente, thermische Isolationselemente für Kühloder Wärmeaggregate, beispielsweise Warmwasserspeicher, thermisch isolierte Container, z.B. im Fahrzeugbau oder in analogen Einsatzgebieten verwendet.

Ein erfindungsgemäßes Sandwichelement ist beispielhaft in Figur 3 dargestellt und weist im Querschnitt folgende Schichten auf:
iv) 1 bis 25 mm mindestens eines thermoplastischen Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
ii) gegebenenfalls 5 bis 1000 µm mindestens eines Kunststoffes,
i) 0,5 bis 80 cm Polyisocyanat-Polyadditionprodukt,
ii) gegebenenfalls 5 bis 1000 µm mindestens eines Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes.

Ein erfindungsgemäßes Rohr ist beispielhaft in Figur 4 dargestellt und weist im Querschnitt folgende Schichten auf:
iv) 1 bis 25 mm mindestens eines thermoplastischen Kunststoffes und/oder mindestens eines Metalles als Innenrohr,
i) 0,5 bis 80 cm Polyisocyanat-Polyadditionprodukt,
ii) gegebenenfalls 5 bis 1000 µm mindestens eines Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes als Außenrohr.

Falls das Innenrohr des Rohres thermoplastischen Kunststoff enthält, wiest das erfindungsgemäße Rohr bevorzugt folgende Schichten auf:
iv) 1 bis 25 mm mindestens eines thermoplastischen Kunststoffes als Innenrohr,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
ii) gegebenenfalls 5 bis 1000 µm mindestens eines Kunststoffes,
i) 0,5 bis 80 cm Polyisocyanat-Polyadditionprodukt,
ii) gegebenenfalls 5 bis 1000 µm mindestens eines Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes als Außenrohr.

Die Figuren 3 und 4 sind beispielhaft wie die Figur 2 für den Fall gestaltet, daß die Schichten (iiia) und (iv) unterscheidbar sind. Falls für die Schichten (iiia) und (iv) gleiche Materialien eingesetzt werden, geht auch hier die Schicht (iiia) durch das innige Verschmelzen mit der Schicht (iv) in dieser Schicht (iv) auf. Eine Unterscheidung der Schichten (iiia) und (iv) wäre dann nicht möglich.

Bevorzugt sind erfindungsgemäß Verbundelemente, bei denen die Schichten (iiia) und (iv) unterscheidbar sind, beispielsweise durch den bereits beschriebenen Zusatz von Ruß, Graphit, gemahlene Fasern, Mikroglaskugeln, Zeolithe, organische Infrarotabsorber wie z.B. Paliogen® schwarz der BASF Aktiengesellschaft, Lignine, Silikate, Glimmer, Glasfasern, Kreide, Titandioxid und/oder anderen bekannten Füllstoffen zu der Schicht (iv) und der Abwesenheit dieser Substanzen in der Schicht (iiia).

Als Schicht (ii) können übliche Materialien eingesetzt werden, an dem die Polyisocyanat-Polyadditionsprodukte nach ihrer Herstellung ausreichend haften. Bevorzugt setzt man folgende Materialien ein: Polyamid, Kunststoffe, die Esterstrukturen enthalten, z.B. Polyethylenterephthalat, Polystyrol, Polyvivylchlorid und/oder Polyolefine, wobei die Oberfläche von (ii) besonders bevorzugt koronageätzt sein kann.

In den erfindungsgemäßen Verbunden können die Schichten (ii), (iii), (iiia) und (iv), insbesondere die Schichten (iii) und (iiia), auch mehrfach hintereinander angeordnet sein, beispielsweise in einer Folge (i), (ii), (iii), (iiia), (iii), (iiia), (iv).

Die erfindungsgemäßen Produkte können nach üblichen Verfahren kontinuierlich oder diskontinuierlich, beispielsweise auf einer Bandanlage oder analogen Anlagen zur Herstellung von gedämmten Rohren hergestellt werden, wobei man wie eingangs beschrieben den Reaktionsraum zur Herstellung der Polyisocyanat-Polyadditionsprodukte durch bereits dargestellten Schichten begrenzt.

Die Umsetzung von Isocyanaten mit gegenüber Isocyanaten reaktiven Verbindungen in Gegenwart von Treibmitteln und gegebenenfalls Katalysatoren, Hilfs- und/oder Zusatzstoffen zu den (i) Polyisocyanat-Polyadditionsprodukten ist allgemein bekannt und vielfältig beschrieben. Bevorzugt stellen die Polyisocyanat-Polyadditionsprodukte (i) geschäumte Polyisocyanat-Polyadditionsprodukte dar, besonders bevorzugt Polyurethan- und/oder Polyisocyanurathartschaumstoffe.

Als Isocyanate, bevorzugt organische und/oder modifizierte organische Polyisocyanate, kommen die an sich bekannten aliphatischen, cycloaliphatischen, araliphatischen und vorzugsweise aromatischen mehrwertigen Isocyanate in Frage, wie sie beispielsweise in EP-A-0 421 269 (Spalte 4, Zeile 49, bis Spalte 6, Zeile 22) oder in EP-A-0 719 807 (Spalte 2, Zeile 53, bis Spalte 4, Zeile 21) aufgeführt sind.

Besonders bewährt haben sich Diphenylmethan-diisocyanat-Isomerengemische oder Roh-MDI mit einem Diphenylmethandiisocyanatisomerengehalt von 33 bis 55 Masse-% und urethangruppenhaltige Polyisocyanatgemische auf Basis von Diphenylmethandiisocyanat mit einem NCO-Gehalt von 15 bis 33 Masse-%.

Als gegenüber Isocyanaten reaktive Verbindungen können Verbindungen mit mindestens zwei gegenüber Isocyanaten reaktiven Wasserstoffatomen verwendet werden. Hierfür kommen Verbindungen in Frage, die zwei oder mehrere reaktive Gruppen, ausgewählt aus OH-Gruppen, SH-Gruppen, NH-Gruppen, NH₂-Gruppen und CH-aciden Gruppen im Molekül tragen.

Zweckmäßigerweise werden solche mit einer Funktionalität von 2 bis 8, vorzugsweise 2 bis 6, und einem mittleren Molekulargewicht von 60 bis 8000 verwendet. Bewährt haben sich z.B. Polyetherpolyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genanten Polyole, die bevorzugt ein mittleres Molekulargewicht von 301 bis 4000 aufweisen. Vorzugsweise Anwendung finden Polyester-polyole und/oder Polyether-polyole. Die Hydroxylzahl der Polyhydroxylverbindungen beträgt dabei in aller Regel 100 bis 850 und vorzugsweise 200 bis 600. Nähere Ausführungen zu den einsetzbaren Verbindungen sind beispielsweise aus EP-A-0 421 269 (Spalte 6, Zeile 23, bis Spalte 10, Zeile 5) oder EP-A-0 719 807 (Spalte 4, Zeile 23, bis Spalte 7, Zeile 55) ersichtlich. Die PUR-Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Diole und/oder Triole mit Molekulargewichten kleiner als 400, vorzugsweise von 60 bis 300 verwendet werden. In Betracht kommen vorzugsweise aliphatische, cycloaliphatische und/oder araliphatische Diole mit 2 bis 14, vorzugsweise 4 bis 10 Kohlenstoffatomen. Nähere Ausführungen zu diesen und weiteren einsetzbaren Verbindungen sind beispielsweise aus EP-A-0 421 269 (Spalte 10, Zeilen 6 bis 48) zu entnehmen.

Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber Isocyanaten reaktiven Verbindungen mit einem Molekulargewicht von 60 bis 8000, zum Einsatz.

Als Treibmittel können die üblichen physikalischen Treibmittel wie Alkane, Alkene, Cycloalkane, Ester, Ether, Ketone, Acetale und/oder Fluoralkane und chemisch wirkende Treibmittel wie Wasser zum Einsatz kommen. Beispielhaft seien im einzelnen genannt: Butan, n-Pentan, iso-Pentan, Cyclopentan, Cyclohexan, Methylformiat, Ethylformiat, Methylacetat, Ethylacetat, Methylethylether, Diethylether, Aceton, Formaldehyddimethylacetal, Tetrafluorethan, Difluorchlormethan und/oder 1,1,1-Di-chlor-fluorethan. Dabei können die physikalischen Treibmittel natürlich auch als Mischungen verwendet werden.

Bevorzugt ist die Verwendung einer Kombination von physikalischen Treibmitteln und Wasser, d.h. Kohlendioxid, das bei der Reaktion von Wasser mit Isocyanat gebildet wird. Besonders bevorzugt wird eine Treibmittelmischung enthaltend Wasser und Cyclopentan verwendet, insbesondere eine Treibmittelmischung enthaltend Wasser, Cyclopentan und mindestens einen Stoffe Isopentan und/oder n-Pentan.

Als Katalysatoren zur Herstellung der PUR- und/oder PUR/PIR-Hartschaumstoffe werden insbesondere Verbindungen verwendet, die die Reaktion der reaktive Wasserstoffatome, insbesondere Hydroxylgruppen, enthaltenden Verbindungen der Komponente (b) mit den organischen, gegebenenfalls modifizierten Polyisocyanaten (a) stark beschleunigen. Die Isocyanatgruppen können durch geeignete Katalysatoren aber auch miteinander zur Reaktion gebracht werden, wobei neben den Addukten zwischen Isocyanaten und den Verbindungen mit wasserstoffaktiven Gruppen vorzugsweise Isocyanuratstrukturen entstehen.

Als Katalysatoren werden also insbesondere solche Stoffe verwendet, die Reaktionen der Isocyanate beschleunigen, insbesondere die Urethan-, Harnstoff- und Isocyanuratbildung.

Bevorzugt hierfür sind tertiäre Amine, Zinn- und Bismutumverbindungen, Alkali- und Erdalkalicarboxylate, quarternäre Ammoniumsalze, s-Hexahydrotriazine und Tris-(dialkylaminomethyl)-phenole.

Nähere Angaben zu einsetzbaren Katalysatoren sind beispielsweise aus EP-A-0 719 807 (Spalte 9, Zeilen 5 bis 56) zu entnehmen.

Der Reaktionsmischung zur Herstellung der PUR- und/oder PUR/PIR-Hartschaumstoffe können gegebenenfalls auch noch Hilfsmittel und/oder Zusatzstoffe einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen. Nähere Ausführungen zu den einsetzbaren Verbindungen sind beispielsweise aus EP-A-0 421 269 (Spalte 12, Zeile 55, bis Spalte 14, Zeile 16) oder EP-A-0 719 807 (Spalte 9, Zeile 58, bis Spalte 13, Zeile 17) ersichtlich.

Zur Herstellung der PUR-Hartschaumstoffe werden die organischen und/oder modifizierten organischen Polyisocyanate und die gegenüber Isocyanaten reaktiven Verbindungen in solchen Mengen zur Umsetzung gebracht, daß das Äquivalenz-Verhältnis von NCO-Gruppen der Polyisocyanate zur Summe der reaktiven Wasserstoffatome 0,85 bis 1,75:1, vorzugsweise 1,0 bis 1,3:1 und insbesondere 1,1 bis 1,2:1, beträgt. Falls die Hartschaumstoffe auf Isocyanatbasis zumindest teilweise Isocyanuratgruppen gebunden enthalten, wird üblicherweise ein Verhältnis von NCO-Gruppen der Isocyanate zur Summe der reaktiven Wasserstoffatome der gegenüber Isocyanaten reaktiven Verbindungen von 1,5 bis 60:1, vorzugsweise 3 bis 8:1, angewandt.

Die Hartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Als besonders vorteilhaft hat es sich erwiesen, nach dem Zweikomponenten-Verfahren zu arbeiten und die gegenüber Isocyanaten reaktiven Verbindungen, die Treibmittel und gegebenenfalls Katalysatoren, Hilfs- und/oder Zusatzstoffe in der Komponente (A), der sogenannten Polyolkomponente, zu vereinigen und als Komponente (B), der sogenannten Isocyanatkomponente, die Isocyanate oder Mischungen aus den Isocyanaten und gegebenenfalls Treibmittel zu verwenden.

Die Herstellung von Sandwichelementen, Rohren oder der anderen erfindungsgemäßen Artikel ist allgemein bekannt.

Beispielsweise werden die Ausgangskomponenten bei einer Temperatur von 15 bis 80°C, vorzugsweise von 20 bis 30°C, gemischt und in ein offenes oder gegebenenfalls unter erhöhtem Druck in ein geschlossenes Formwerkzeug eingebracht. Die Formwerkzeugtemperatur beträgt zweckmäßigerweise 20 bis 70 °C, bevorzugt 30 bis 60 °C, insbesondere 40 bis 50 °C. Bevorzugt kann man die Wände des Formwerkzeuges beispielsweise durch die Einlage von Hartschaumstoffteilen thermisch isolieren.

Bei der Herstellung der Polyurethan- oder Polyurethan/Polyisocyanuratschaumstoffe entstehen bevorzugt Temperaturen zwischen 100 und 170°C. Bei diesen Temperaturen schmilzt die Schicht (iiia), ohne die Schicht (iv) zu zerstören.

Sandwichelemente kann man beispielsweise diskontinuierlich durch einlegen der erfindungsgemäßen Schichtfolge in eine Formenpresse und Ausschäumen des Hohlraumes mit Hartschaumstoffen auf Isocyanatbasis in bekannter Weise herstellen. Gibt man die Schichtenfolge über Rollen in ein Doppeltransportband, kann man die erfindungsgemäßen Verbunde als Sandwichelemente auch in an sich bekannter Weise kontinuierlich herstellen, indem man durch kontinuierliche Zugabe des schaumfähigen Gemisches die Schicht (i) einfügt.

In analoger Weise kann diskontinuierlich gedämmte Rohre herstellen, indem man im Mantelrohr mit der erfindungsgemäßen Schichtfolge per Abstandshalter das Mediumrohr zentrisch fixiert und den Hohlraum zwischen den Rohren in bekannter Weise ausschäumt. Durch die schlechte Wärmeleitung des Mantelrohres entstehen im Inneren Temperaturen, die zur Verschweißung der Schichten (iii), (iiia) und (iv) führen. Auch eine kontinuierliche Herstellung der erfindungsgemäßen Rohre ist beispielsweise mittels eines bekannten Formtransportbandes möglich, wobei zunächst das Schaumsystem auf das Mediumrohr aufgetragen wird und direkt im Anschluß die erfindungsgemäßen Schichten beispielsweise aufgewickelt werden. Auch dabei erfolgt erfindungsgemäß das Verschweißen der Schichten durch die entstehende Reaktionswärme.

Die Erfindung soll anhand der folgenden Beispiele näher erläutert werden.

Die Ausgangskomponenten zur Herstellung der Polyisocyanat-Polyadditionsprodukte sind in der Tabelle 1 dargestellt:

**Tabelle 1**

| A-Komponente: | Hartschaum 1 | Hartschaum 2 | Hartschaum 3 | Hartschaum 4 |
|---|---|---|---|---|
| Polyol 1 | 91,2 | - | - | - |
| Polyol 2 | - | 83,2 | - | - |
| Polyol 3 | - | - | 89,3 | - |
| Polyol 4 | - | - | - | 94,0 |
| Dipropylenglykol | 4,0 | 5,0 | 6,0 | - |
| Triethylphosphat | - | 6,0 | - | - |
| Stabilisatorgemisch | 1,5 | 1,5 | 1,5 | 2,0 |
| Amin-Katalysatorgemisch | 1,5 | 0,8 | 2,3 | 3,0 |
| Wasser | 1,8 | 3,5 | 0,9 | 1,0 |
| Treibmittel | 13,0 | - | 7,0 | 6,5 |

| B-Komponente: | | | | |
|---|---|---|---|---|
| Isocyanat | 160 | 160 | 153 | 150 |

Die Angaben in der Tabelle 1 beziehen sich auf Gewichtsteile.
Polyol 1: Polyolgemisch auf der Basis von Sorbit, Pentaerythrit und Saccharose, Hydroxylzahl: 458 (440-480), mittlere Funktionalität: 4,5 (4,4-4,6),
Polyol 2: Polyolgemisch auf der Basis von Sorbit und Propylenglykol, Hydroxylzahl: 397 (380-420), mittlere Funktionalität: 4,2 (4,1-4,3),
Polyol 3: Polyolgemisch auf der Basis von Sorbit, Pentaerythrit, Saccharose und Glycerin, Hydroxylzahl: 492 (480-510), mittlere Funktionalität: 4,6 (4,5-4,7),
Polyol 4: Polyolgemisch auf der Basis von Sorbit, Saccharose und Glycerin, Hydroxylzahl: 489 (470-500), mittlere Funktionalität: 4,8 (4,7-4,9),

Treibmittel: physikalisch wirkendes Treibmittel auf der Basis von Alkanen/Cycloalkan.

Die Hartschaumstoffe wiesen die in Tabelle 2 angegebenen Reaktionsparameter auf.

**Tabelle 2**

| Hartschaum | Startzeit [s] | Abbindezeit [s] | Steigzeit [s] | Dichte [kg/m³] |
|---|---|---|---|---|
| 1 | 35 | 135 | 210 | 40 |
| 2 | 35 | 140 | 240 | 41 |
| 3 | 14 | 65 | 103 | 60 |
| 4 | 10 | 60 | 96 | 63 |

Ist jedes Beispiel mit 4 Systemen durchgeführt worden? Bitte angeben, welche Produkte mit welchem System hergestellt wurden.

### Herstellung der Polyurethan-Hartschaumstoff - Verbunde

### A) Plattenförmige Verbunde

100 Gewichtsteile der A-Komponente wurden entsprechend dem in der Tabelle angegebenen Mischungsverhältnis unter intensivem Rühren oder mittels einer Hochdruck-Schäummaschine verschäumt. Das Gemisch aus der A-Komponente und dem Isocyanat als B-Komponente wurde unmittelbar nach dem Vermischen in ein auf 45°C temperiertes Formwerkzeug der Abmessungen 300 mm x 400 mm x 80 mm gegossen, wobei das Formwerkzeug durch die Einlage von Hartschaumstoffteilen auf eine Dicke von 40 mm verengt worden war. Durch die Schaumeinlagen entstehen im herzustellenden Verbund Temperaturen beim Verschäumen, die eine thermoplastische Verbindung Polyethylen/Polyethylen gestatten. In dieses verengte Formwerkzeug werden im Vergleichsversuch Polyethylenplatten einer Dicke von 3 mm und bei der erfindungsgemäßen Verbundherstellung zusätzlich Verbundfolien zum Aufbau der Verbundschichtfolge oben und unten eingelegt, so daß der mit Schaumstoff auszuschäumende Hohlraum von 4080 cm3 etwa 34 mm dick ist. In diesen Hohlraum wurden 285,6 g des Schaumsystems eingefüllt, so daß die Gesamtdichte des Hartschaumstoffkerns im Verbund 70kg/m3 betrug. Nach einer Entformzeit von 30min wurden die Verbundkörper entnommen. Diese wurden 24 Stunden bei Raumtemperatur (entspricht einem frisch hergestellten Verbund) und mehrere Monate bei 80°C (entspricht einem gealterten Verbund) gelagert. Während der Lagerung bei 80°C werden die Seiten der Verbundplatte der Abmessung 300 mm x 400 mm x 40 mm mit einer Polyurethanvergußmasse, bedeckt mit einer 200 µm Aluminiumschicht, versiegelt, damit Gasaustauschprozesse nur über die Verbundschichten stattfinden. Unmittelbar vor der Messung werden die Prüfkörper 200 mm x 200 mcm x 40 mm mit einem Hartschaumkern der Dicke von etwa 34 mm aus der Plattenmitte herausgetrennt.

Die Wärmeleitfähigkeit bei Raumtemperatur wurde mit dem Gerät ANACON, Model 88 der Fa. Anacon, St. Peters Road Maidenhead Berkshire England SL6 7QA bei 23,9°C Mitteltemperatur (Gradient 37,7°C /10°C) und die Wärmeleitfähigkeit bei erhöhter Temperatur mit dem Gerät Rapid-k VT 400 der Fa. Holometrix Inc., Boston, USA, gemessen.

Die Alterung des Schaumstoffes im Verbund wurde wie folgt durch Lagerung in einem Temperaturgradienten ("Gradientenlagerung") untersucht:

Ein erfindungsgemäßer Verbund z.B. der Schichtfolge Stahl/PUR - Schaum (i)/Kunststoffschicht (ii)/Barriereschicht (iii)/Polyolefinschicht (iiia)/Polyolefinschicht (iv) wird an der Stahlseite mittels Heizplatte auf eine Temperatur von 180°C und an der äußeren Polyolefinseite (e) auf 80°C erhitzt (durch Unterbringung der Anordnung in einem belüfteten Schrank mit einer Innentemperatur von 80°C).

Der Verbund wird in dieser Weise 3 Monate gelagert.

Zum Vergleich wird ein nicht erfindungsgemäßer Verbund z.B. der Schichtfolge Stahl/PUR - Schaum (i)/Polyolefinschicht (iv) in gleicher Weise gelagert. Vor und nach der Lagerung wird die Beschaffenheit des Schaumstoffes in der Umgebung der heißen Stahlschicht beurteilt.

### B) Rohrförmige Verbunde

Ein Stahlrohr einer Länge von 6 m mit einem Außendurchmesser von 60,3 mm wird in einem Polyethylenrohr mit einem Innendurchmesser von 125 mm mit Abstandshaltern aus Kunststoff in bekannter Weise konzentrisch fixiert, und die Stirnseiten werden mit Stahlscheiben abgedichtet. Der Raum zwischen den Rohren von 56,5 1 wird mit Hartschaumstoff ausgeschäumt, wobei die maschinell hergestellte Reaktionsmischung aus A- und B-Komponente durch entsprechende Öffnungen in einer der Stahlscheiben eingebracht wird. Die Gesamtdichte des Schaums wird zwischen 80 und 100 kg/m³ gewählt.

Erfindungsgemäße Verbunde werden durch die Einlage der entsprechenden Schichtfolgen in Form vorgefertigter Folien in das Innere des Polyethylenrohres hergestellt. Die Folien werden dabei vor dem Verschäumen durch Aufblasen an die Polyethylen-Rohrinnenwand gedrückt.

Die Wärmeleitfähigkeit des Schaumstoffes wird an aus dem Rohr entnommenen 20 mm dicken Probestücken der Abmessungen 7,5 cm x 20 cm mit dem ANACON - Gerät gemessen.

### Beispiel 1, plattenförmiger Verbund nach (A) (Vergleich)

| Schichtfolge im Verbund: | |
|---|---|
| Schicht (iv) | Polyethylen, 3 mm Dicke, innen, d.h. zur Seite des Hartschaumstoffs, koronageätzt, |
| Schicht (i) | Hartschaum 4, |
| Schicht (iv) | Polyethylen, innen koronageätzt, 3 mm. |

Haftfestigkeit im Verbund nach DIN 53292: > 0,1 N / mm2 Wärmeleitfähigkeit 23°C nach 24 h Lagerung bei RT: 22,9 mW/mK Wärmeleitfähigkeit 23°C nach 3 Monaten/80°C: 27,5 mW/mK

Die Koronaätzung ist ein bekanntes Verfahren zur Oberflächenbehandlung zum Zwecke der Verbesserung der Haftung mittels elektrischer Entladung, z.B. Hochspannungs-Funkenentladung. Ein geeignetes Gerät ist z.B. der Typ arcojet® der Firma Agrodyn Hochspannungs-GmbH, Steinhagen. Eine solche Oberflächenbehandlung wird in dem erfindungsgemäßen Verfahren bevorzugt durchgeführt.

### Beispiel 2, plattenförmiger Verbund nach (A) (Vergleich)

| Schichtfolge im Verbund: | |
|---|---|
| Schicht (iv) | Polyethylen, innen koronageätzt, 3 mm, |
| Schicht (iii) | Aluminium, 30 µm, |
| Schicht (i) | Hartschaum 4, |
| Schicht (iii) | Aluminium, 30 µm, |
| Schicht (iv) | Polyethylen, innen koronageätzt, 3 mm. |

Es ließ sich kein haftender Verbund herstellen.

### Beispiel 3, plattenförmiger Verbund nach (A) (erfindungsgemäß)

| Schichtfolge im Verbund: | |
|---|---|
| Schicht (iv) | Polyethylen, innen koronageätzt, 3 mm, |
| Schicht (iiia) | Polyethylen, 50 µm, laminiert, |
| Schicht (iii) | Aluminium, 6 µm, laminiert, |
| Schicht (ii) | Polyethylenterephthalat, 12 µm, und Polyamid, 15 µm, wobei das Nylon in Richtung des Hartschaumstoffes weist, |
| Schicht (i) | Hartschaum 4, Dicke 33,9 mm, |
| Schicht (ii) | Polyethylenterephthalat, 12 µm, und Polyamid, 15 µm, wobei das Nylon in Richtung des Hartschaumstoffes weist, |
| Schicht (iii) | Aluminium, 6 µm, |
| Schicht (iiia) | Polyethylen, 50 µm, |
| Schicht (iv) | Polyethylen, innen koronageätzt, 3 mm. |

Die Schichten (iiia), (iii) und (ii) wurden in Form einer vorkaschierten Verbundfolie der Firma ITOCHU STAHL GmbH, Düsseldorf, eingesetzt.

Wärmeleitfähigkeit 23°C nach 24 h Lagerung bei RT: 23,0 mW/mK Wärmeleitfähigkeit 23°C nach 3 Monaten/80°C: 23,0 mW/mK

Haftfestigkeit: > 0,1 N/mm²

### Beispiel 4, plattenförmiger Verbund nach (A) (erfindungsgemäß)

| Schichtfolge im Verbund: | |
|---|---|
| Schicht (iv) | Polyethylen, innen koronageätzt, 3 mm, |
| Schicht (iiia) | Polyethylen, 100 µm, |
| Schicht (iii) | Aluminium, 9 µm, |
| Schicht (ii) | Polyamid, 15 µm, |
| Schicht (i) | Hartschaum 1, |
| Schicht (ii) | Polyamid, 15 µm, |
| Schicht (iii) | Aluminium, 9 µm, |
| Schicht (iiia) | Polyethylen, 100 µm, |
| Schicht (iv) | Polyethylen, innen koronageätzt, 3 mm. |

Die Schichten (iiia), (iii) und (ii) wurden in Form einer vorkaschierten Verbundfolie des Typs OPA15/ALU9/PE der Firma DANISCO, Lyngby, Dänemark, eingesetzt.

Wärmeleitfähigkeit 23°C nach 24 h Lagerung bei RT: 22,8 mW/mK Wärmeleitfähigkeit 23°C nach 3 Monaten/ 80°C: 23,0 mW/mK Wärmeleitfähigkeit 60°C, nach 24 h Lagerung bei RT: 28 mW/mK Wärmeleitfähigkeit 60°C, nach 3 Monaten/80°C: 27,9 mW/mK

Haftfestigkeit: > 0,1 N/mm2

### Beispiel 5, plattenförmiger Verbund nach (A) (erfindungsgemäß)

| Schichtfolge im Verbund: | |
|---|---|
| Schicht (iv) | Polyechylen, innen koronageätzt, 3 mm, |
| Schicht (iiia) | Polyethylen, 100 µm, |
| Schicht (iiia) | Polyethylentherephthalat, 100 µm, |
| Schicht (iii) | Aluminium gesputtert, 0,20 µm, |
| Schicht (iiia) | Polyethylentherephthalat, 100 µm, |
| Schicht (iii) | Aluminium, 30 µm, |
| Schicht (ii) | Polyethylentherephthalat, 100 µm, |
| Schicht (i) | Hartschaum 1, |
| Schicht (ii) | Polyethylentherephthalat, 100 µm, |
| Schicht (iii) | Aluminium, 30 µm, |
| Schicht (iiia) | Polyethylentherephthalat, 100 µm, |
| Schicht (iii) | Aluminium gesputtert, 0,20 µm, |
| Schicht (iiia) | Polyethylentherephthalat, 100 µm, |
| Schicht (iiia) | Polyethylen, 100 µm, |
| Schicht (iv) | Polyethylen, innen koronageätzt, 3 mm. |

Die Schichten (iiia), (iii) und (ii) wurden in der angegebenen Reihenfolge und Anzahl an Schichten in Form einer vorkaschierten Verbundfolie eingesetzt.

Wärmeleitfähigkeit 23°C nach 24 h Lagerung bei RT: 23,2 mW/mK
Wärmeleitfähigkeit 23°C nach 3 Monaten/80°C: 23,4 mW/mK

Haftfestigkeit > 0,1 N/mm²

### Beispiel 6, plattenförmiger Verbund nach (A) (erfindungsgemäß)

| Schichtfolge im Verbund: | |
|---|---|
| Schicht (ii) | Polyethylen, innen koronageätzt, 3 mm, |
| Schicht (iiia) | Polyethylen, 100 µm, |
| Schicht (iiia) | Polyethylenthevephthalat, 100 µm, |
| Schicht (iii) | Aluminium gesputtert, 0,2 µm, |
| Schicht (iiia) | Polyethylentherephthalat, 100 µm, |
| Schicht (iii) | Aluminium, 30 µm, |
| Schicht (ii) | aus Polyethylentherephthalat, 100 µm, |
| Schicht (i) | Hartschaum 6, |
| Schicht (ii) | Polyethylentherephthalat, 100 µm, |
| Schicht (iii) | Aluminium, 30 µm, |
| Schicht (iiia) | aus Polyethylentherephthalat, 100 µm, |
| Schicht (iii) | Aluminium gesputtert, 20 µm, |
| Schicht (iiia) | Polyethylentherephthalat, 100 µm, |
| Schicht (iiia) | Polyethylen, 100 µm, |
| Schicht (iv) | Polyethylen, innen koronageätzt, 3 mm. |

Die Schichten (iii), (iiia) und (ii) wurden in der angegebenen Reihenfolge und Anzahl in Form einer vorkaschierten Verbundfolie eingesetzt.

Wärmeleitfähigkeit 23°C nach 24 h Lagerung bei RT: 29,0 mW/mK Wärmeleitfähigkeit 23°C nach 3 Monaten/80°C: 29,3 mW/mK

### Beispiel 7, plattenförmiger Verbund nach (A) (Vergleich)

| Schichtfolge im Verbund: | |
|---|---|
| Schicht (iv) | Polyethylen, 3mm, innen koronageätzt, |
| Schicht (i) | Hartschaum 2, |
| Schicht (iv) | Polyethylen, innen koronageätzt, 3 mm. |

Wärmeleitfähigkeit 23°C nach 24 h Lagerung bei RT: 29,2 mW/mK
Wärmeleitfähigkeit 23°C nach 3 Monaten/ 80°C: 38,3 mW/mK

### Beispiel 8 (Vergleich), rohrförmiger Verbund nach (B)

Schichtfolge von innen nach außen:
(iv) Stahl (innen), 2,9-3,0 mm
(i) Hartschaum, 40 mm bzw. 32,5 mm
(iv) Polyethylen, 3mm.

Es wurden 0,5 m lange Rohrstücke mit seitlicher Versiegelung durch eine Polyurethan - Vergußmasse mit 200 µm Aluminiumfolie bei 80°C gelagert.

Die Wärmeleitfähigkeit von entnommenen Probestücken beträgt:
Vor der Lagerung (24 h nach dem Verschäumen): 23,5 mW/mK
   Nach 3 Mon. Lagerung: 28,0 mW/mK

### Beispiel 9 (erfindungsgemäß), rohrförmiger Verbund nach (B)

Schichtfolge von innen nach außen:
(iv) Stahl (innen),
(i) Hartschaum 1,
(ii) Polyamid, 15 µm,
(iii) Aluminium, 9 µm,
(iiia) Polyethylen, 100 µm,
(iv) Polyethylen, 3 mm, innen koronageätzt.

Die Schichten (iii), (iiia) und (ii) wurde in Form einer vorkaschierten Verbundfolie des Typs OPA15/ALU9/PE der Firma DANISCO, Lyngby, Dänemark, eingesetzt.

Es wurden 0,5 m lange Rohrstücke mit seitlicher Versiegelung wie in Beispiel 8 bei 80°C gelagert.

Die Wärmeleitfähigkeit von entnommenen Probestücken beträgt:
Vor der Lagerung (24 h nach dem Verschäumen): 23,5 mW/mK
Nach 3 Mon. Lagerung: 24,0 mW/mK

### Beispiel 10, plattenförmiger Verbund nach (A) (Vergleich)

Schichtfolge im Verbund:
(iv) Stahl, 2 mm,
(i) Hartschaum 35 mm,
(iv) Polyethylen, 3 mm, zur Schaumseite hin koronageätzt.

Nach Gradientenlagerung 180°C (Stahlseite)/80°C Polyethylenseite über 3 Monate ist der Schaum am Stahl verkohlt und stark zerstört.

### Beispiel 11, plattenförmiger Verbund nach A) (erfindungsgemäß)

Schichtfolge im Verbund:
(iv) Stahl, 2 mm,
(i) Hartschaum 1,
(ii) Polyamid, 15 µm,
(iii) Aluminium 9 µm
(iiia) Polyethylen 100 µm
(iv) Polyethylen, 3 mm, zur Schaumseite hin koronageätzt.

Die Schichten (iiia), (iii) und (ii) wurden in Form einer vorkaschierten Verbundfolie des Typs OPA15/ALU9/PE der Firma DANISCO, Lyngby, Dänemark, eingesetzt.

Nach Gradientenlagerung 180°C (Stahlseite)/80°C Polyethylenseite über 3 Monate ist der Schaum am Stahl noch unversehrt und nur leicht verfärbt.

## Patentansprüche

1. Verfahren zur Herstellung eines Verbundelementes, **dadurch gekennzeichnet, daß** man in einem Reaktionsraum, der begrenzt ist durch folgende Schichten:
ii) gegebenenfalls mindestens einen Kunststoff, daran anschließend
iii) einem Material, das eine Gaspermeation verhindert, iiia) 20 bis 500 µm mindestens eines thermoplastischen Kunststoffs sowie
iv) 1 bis 25 mm mindestens eines thermoplastischen Kunststoffes
Isocyanate mit gegenüber Isocyanaten reaktiven Verbindungen in Gegenwart von Treibmitteln und gegebenenfalls Katalysatoren, Hilfs- und/oder Zusatzstoffen umsetzt, wobei durch die Reaktionswärme (iiia) schmilzt und nach Abkühlung (iii) und (iv) miteinander verbindet.

2. Verfahren nach Anspruch 1, **dadurch gekennzeichnet, daß** (iii) und (iiia) in Form einer beschichteten Verbundfolie einsetzt.

3. Sandwichelement, daß im Querschnitt folgende Schichten aufweist:
iv) 1 bis 25 mm mindestens eines thermoplastischen Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
ii) gegebenenfalls 5 bis 1000 µm mindestens eines Kunststoffes,
i) 0,5 bis 80 cm Polyisocyanat-Polyadditionsprodukt,
ii) gegebenenfalls 5 bis 1000 µm mindestens eines Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes,
erhältlich durch ein Verfahren gemäß Anspruch 1 oder 2.

4. Rohr, das im Querschnitt folgende Schichten aufweist:
iv) 1 bis 25 mm mindestens eines thermoplastischen Kunststoffes und/oder mindestens eines Metalles als Innenrohr,
i) 0,5 bis 80 cm Polyisocyanat-Polyadditionsprodukt,
ii) gegebenenfalls 5 bis 1000 µm mindestens eines Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes als Außenrohr,
erhältlich durch ein Verfahren gemäß Anspruch 1 oder 2.

5. Rohr, das im Querschnitt folgende Schichten aufweist:
iv) 1 bis 25 mm mindestens eines thermoplastischen Kunststoffes und/oder mindestens eines Metalles als Innenrohr,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
ii) gegebenenfalls 5 bis 1000 µm mindestens eines Kunststoffes,
i) 0,5 bis 80 cm Polyisocyanat-Polyadditionsprodukt,
ii) gegebenenfalls 5 bis 1000 µm mindestens eines Kunststoffes,
iii) 0,1 bis 200 µm einer Metallfolie, die auf der Seite, die von (i) und (ii) abgewandt ist, mit 20 bis 500 µm mindestens eines thermoplastischen Kunststoffes (iiia) beschichtet ist, der durch Aufschmelzen (iii) und (iv) miteinander verbindet,
iv) 1 bis 25 mm mindestens eines thermoplastischen Kunststoffes als Außenrohr,
erhältlich durch ein Verfahren gemäß Anspruch 1 oder 2.

## Claims

1. A process for producing a composite element, which comprises reacting isocyanates with compounds which are reacted toward isocyanates in the presence of blowing agents and, if desired, catalysts, auxiliaries and/or additives in a reaction space which is bounded by the following layers:
ii) optionally at least one polymer, adjoining it
iii) a material which prevents gas permeation, iiia) from 20 to 500 µm of at least one thermoplastic polymer and
iv) from 1 to 25 mm of at least one thermoplastic polymer, resulting in (iiia) melting under the action of the heat of reaction and joins (iii) and (iv) to one another after cooling.

2. A process as claimed in claim 1, wherein (iii) and (iiia) are used in the form of a coated composite film.

3. A sandwich element which, viewed in cross section, has the following layers:
iv) from 1 to 25 mm of at least one thermoplastic polymer,
iii) from 0.1 to 200 µm of a metal foil which is coated on the side facing away from (i) and (ii) with from 20 to 500 µm of at least one thermoplastic polymer (iiia) which joins (iii) and (iv) to one another by melting,
ii) optionally from 5 to 1000 µm of at least one polymer,
i) from 0.5 to 80 cm of a polyisocyanate polyaddition product,
ii) optionally from 5 to 1000 µm of at least one polymer,
iii) from 0.1 to 200 µm of a metal foil which is coated on the side facing away from (i) and (ii) with from 20 to 500 µm of at least one thermoplastic polymer (iiia) which joins (iii) and (iv) to one another by melting,
iv) from 1 to 25 mm of at least one thermoplastic polymer, and is obtainable by a process as claimed in claim 1 or 2.

4. A pipe which, viewed in cross section, has the following layers:
iv) from 1 to 25 mm of at least one thermoplastic polymer and/or at least one metal as inner pipe,
i) from 0.5 to 80 cm of polyisocyanate polyaddition product,
ii) optionally from 5 to 1000 µm of at least one polymer,
iii) from 0.1 to 200 µm of a metal foil which is coated on the side facing away from (i) and (ii) with from 20 to 500 µm of at least one thermoplastic polymer (iiia) which joins (iii) and (iv) to one another by melting,
iv) from 1 to 25 mm of at least one thermoplastic polymer as outer pipe,
and is obtainable by a process as claimed in claim 1 or 2.

5. A pipe which, viewed in cross section, has the following layers:
iv) from 1 to 25 mm of at least one thermoplastic polymer and/or at least one metal as inner pipe,
iii) from 0.1 to 200 µm of a metal foil which is coated on the side facing away from (i) and (ii) with from 20 to 500 µm of at least one thermoplastic polymer (iiia) which joins (iii) and (iv) to one another by melting,
ii) optionally from 5 to 1000 µm of at least one polymer,
i) from 0.5 to 80 cm of polyisocyanate polyaddition product,
ii) optionally from 5 to 1000 µm of at least one polymer,
iii) from 0.1 to 200 µm of a metal foil which is coated on the side facing away from (i) and (ii) with from 20 to 500 µm of at least one thermoplastic polymer (iiia) which joins (iii) and (iv) to one another by melting,
iv) from 1 to 25 mm of at least one thermoplastic polymer as outer pipe,
and is obtainable by a process as claimed in claim 1 or 2.

## Revendications

1. Procédé de production d'un élément composite, **caractérisé en ce qu'**on fait réagir dans un espace réactionnel qui est limité par les couches suivantes :
ii) le cas échéant au moins une matière synthétique,
et adjacente à celle-ci
iii) un matériau qui empêche la perméation des gaz, iiia) de 20 à 500 µm d'au moins une matière synthétique thermoplastique, ainsi que
iv) de 1 à 25 mm d'au moins une matière synthétique thermoplastique,
des isocyanates avec des composés réactifs vis-à-vis des isocyanates en présence d'agents d'expansion et le cas échéant de catalyseurs, d'adjuvants et/ou d'additifs, opération dans laquelle, de par la chaleur de réaction (iiia) fond et, après refroidissement, (iii) et (iv) sont reliées entre elles.

2. Procédé selon la revendication 1, **caractérisé en ce que** (iii) et (iiia) sont utilisés sous la forme d'une feuille composite revêtue.

3. Elément en sandwich, qui présente, en coupe, les couches suivantes :
iv) de 1 à 25 mm d'au moins une matière synthétique thermoplastique,
iii) de 0,1 à 200 µm d'une feuille métallique, qui sur le côté qui est à l'opposé de (i) et (ii) est revêtue de 20 à 500 µm d'au moins une matière synthétique thermoplastique (iiia), qui relie entre elles par fusion (iii) et iv),
ii) le cas échéant de 5 à 1000 µm d'au moins une matière synthétique,
i) de 0,5 à 80 cm d'un produit de polyadddition de polyisocyanate,
ii) le cas échéant de 5 à 1000 µm d'au moins une matière synthétique,
iii) de 0,1 à 200 µm d'une feuille métallique, qui sur le côté qui est à l'opposé de (i) et (ii) est revêtue de 20 à 500 µm d'au moins une matière synthétique thermoplastique (iiia), qui relie entre elles par fusion (iii) et iv),
iv) de 1 à 25 mm d'au moins une matière synthétique thermoplastique, que l'on peut obtenir par un procédé selon l'une des revendications 1 ou 2.

4. Tube qui présente, en coupe, les couches suivantes :
(iv) de 1 à 25 mm d'au moins une matière synthétique thermoplastique et/ou d'au moins un métal comme tube interne,
(i) de 0,5 à 80 cm d'un produit de polyaddition de polyisocyanate,
(ii) le cas échéant de 5 à 1000 µm d'au moins une matière synthétique,
(iii) de 0,1 à 200 µm d'une feuille de métal qui, sur le côté opposé à (i) et (ii), est recouverte de 20 à 500 µm d'au moins une matière synthétique thermoplastique (iiia) qui relie entre eux (iii) et (iv) par fusion,
(iv) de 1 à 25 mm d'au moins une matière synthétique thermoplastique comme tube externe,
que l'on peut obtenir par un procédé selon la revendication 1 ou 2.

5. Tube qui présente, en coupe, les couches suivantes :
iv) de 1 à 25 mm d'au moins une matière synthétique thermoplastique et/ou d'au moins un métal comme tube interne,
iii) de 0,1 à 200 µm d'une feuille de métal qui, sur le côté opposé à (i) et (ii), est recouverte de 20 à 500 µm d'au moins une matière synthétique thermoplastique (iiia) qui relie entre eux (iii) et (iv) par fusion,
ii) le cas échéant de 5 à 1000 µm d'au moins une matière synthétique,
(i) de 0,5 à 80 cm d'un produit de polyaddition de polyisocyanate,
(ii) le cas échéant de 5 à 1000 µm d'au moins une matière synthétique,
(iii) de 0,1à 200 µm d'une feuille de métal qui, sur le côté opposé à (i) et (ii), est recouverte de 20 à 500 µm d'au moins une matière synthétique thermoplastique (iiia) qui relie entre eux (iii) et (iv) par fusion,
(iv) de 1 à 25 µm d'au moins une résine thermoplastique comme tube externe,
que l'on peut obtenir par un procédé selon la revendication 1 ou 2.
